# FASCICULE DE BREVET EUROPEEN

(11) **EP 1 264 316 B1**
(45) Date de publication et mention de la délivrance du brevet: **27.07.2005**
(21) Numéro de dépôt: 01904048.4
(22) Date de dépôt: 02.02.2001
(51) Int. Cl.: G21C 3/10, G21C 21/02, G21C 17/06

(54) **PROCEDE DE CONTROLE D'UNE OPERATION DE FERMETURE ETANCHE PAR SOUDAGE DE L'EXTREMITE D'UN CANAL DE REMPLISSAGE TRAVERSANT LE BOUCHON SUPERIEUR D'UN CRAYON DE COMBUSTIBLE NUCLEAIRE**
SCHWEI$VERFAHREN ZUM DICHTEN VERSCHLIE$EN EINER EINFÜLLÖFFNUNG EINES KERNBRENNSTAB-VERSCHLUSSSTÜCKS
METHOD FOR CONTROLLING AN OPERATION OF SEALED CLOSURE BY WELDING OF A FILLING CHANNEL PASSING THROUGH THE TOP CAP OF A NUCLEAR FUEL PENCIL

(30) Priorité: 15.02.2000 FR 0001859
(43) Date de publication de la demande: 11.12.2002
(73) Titulaire: Société Franco-Belge de Fabrication de Combustibles - FBFC, 92400 Courbevoie (FR)
(72) Inventeur: MAHE, Philippe, F-26750 Montmiral (FR)
(74) Mandataire: Bouget, Lucien
(86) Numéro de dépôt international: PCT/FR2001/000331
(87) Numéro de publication internationale: WO 2001/061707

(56) Documents cités:
- WO-A-01/22428
- US-A- 4 554 128
- US-A- 5 192 846
- US-A- 5 517 420
- US-A- 5 572 102
- US-A- 5 602 885
- US-A- 5 923 555
- US-A- 5 958 267

## Description

L'invention concerne un procédé de contrôle d'une opération de fermeture étanche par soudage de l'extrémité d'un canal de remplissage traversant le bouchon supérieur d'un crayon de combustible nucléaire.

Les réacteurs nucléaires tels que les réacteurs nucléaires refroidis par de l'eau sous pression comportent un coeur constitué par des assemblages de combustible dans lequel de l'énergie sous forme de chaleur est produite pendant le fonctionnement du réacteur.

Chacun des assemblages de combustible est généralement constitué par un faisceau de crayons de combustible parallèles entre eux maintenus dans l'ossature de l'assemblage de combustible. Chacun des crayons de combustible comporte une gaine tubulaire en un matériau absorbant faiblement les neutrons tel qu'un alliage de zirconium, dans laquelle sont empilées des pastilles de combustible nucléaire, par exemple des pastilles d'uranium UO₂ frittées. La gaine tubulaire est fermée à ses extrémités par des bouchons qui comportent chacun une partie cylindrique qui est engagée de manière coaxiale dans une partie d'extrémité de la gaine. Le bouchon et la gaine sont ensuite fixés l'un à l'autre par soudage suivant une ligne circulaire située dans un plan sensiblement perpendiculaire à l'axe de la gaine et du bouchon.

L'un des deux bouchons de fermeture de la gaine d'un crayon de combustible, qui est appelé bouchon supérieur, du fait qu'il assure la fermeture de l'extrémité supérieure du crayon à l'intérieur de l'assemblage de combustible dans la position de service de l'assemblage de combustible dans le coeur du réacteur nucléaire, est traversé axialement par un canal par l'intermédiaire duquel on assure le remplissage de la gaine du crayon, autour des pastilles de combustible nucléaire, par un gaz inerte sous pression tel que l'hélium qui assure la protection des pastilles de combustible contre l'oxydation et favorise les échanges thermiques entre les pastilles et la gaine du crayon lorsque le crayon est en service dans le coeur du réacteur nucléaire.

La fabrication des crayons de combustible demande de nombreuses opérations successives pour réaliser le remplissage de la gaine par les pastilles de combustible, la mise en place et le soudage des bouchons et l'introduction dans la gaine fermée de manière étanche par les bouchons, d'un gaz inerte sous pression tel que l'hélium et la fermeture du canal de remplissage du bouchon, après remplissage. De nombreux contrôles doivent être effectués pendant toutes les étapes de la fabrication du crayon de combustible, de manière à obtenir des crayons de combustible totalement exempts de défauts.

En particulier, la réalisation de la fermeture étanche par soudage du canal de remplissage des bouchons supérieurs doit faire l'objet d'un contrôle rigoureux.

Le remplissage par de l'hélium sous pression des gaines des crayons renfermant les pastilles de combustible et fermées de manière étanche par les bouchons est réalisé dans une installation de remplissage dans laquelle on introduit la partie d'extrémité supérieure du crayon de combustible comportant le bouchon supérieur traversé axialement par le canal de remplissage. L'extrémité du bouchon supérieur sur laquelle débouche le canal de remplissage sous la forme d'une ouverture d'entrée circulaire prolongée axialement par une partie chanfreinée du canal de remplissage est disposée de manière à pouvoir coopérer avec une vanne de fermeture et d'ouverture de la partie d'extrémité chanfreinée du canal de remplissage. Dans la position d'ouverture de la vanne, on réalise l'évacuation de l'air contenu à l'intérieur de la gaine du crayon, puis le remplissage du crayon par de l'hélium sous pression pénétrant à l'intérieur de la gaine par le canal de remplissage du bouchon supérieur. On réalise enfin, dans l'installation de remplissage, la fermeture étanche de l'extrémité du canal de remplissage par une soudure obtenue par fusion d'une partie centrale du bouchon adjacente à la partie d'extrémité du canal de remplissage. Généralement, la fusion du matériau du bouchon pour réaliser la soudure est obtenue sous l'effet d'un faisceau laser dirigé axialement sur la partie d'entrée chanfreinée du canal de remplissage. La soudure obtenue par un laser pulsé est généralement formée de trois pulses de soudage successives, pour augmenter la sûreté et la qualité de réalisation de la fermeture. La partie d'entrée chanfreinée du canal de remplissage est généralement désignée sous le terme de queusot.

Bien entendu, la soudure n'est réalisée dans des conditions satisfaisantes que si l'axe du faisceau laser de fusion du matériau du bouchon, suivant la périphérie de la partie d'entrée chanfreinée du canal de remplissage est centré précisément par rapport à l'ouverture circulaire d'entrée du queusot et si cette ouverture circulaire présente un diamètre d'une dimension prédéterminée et définie de manière très précise.

En outre, après soudage, la qualité des pulses de soudage peut être contrôlée, pour déterminer si le crayon de combustible est parfaitement conforme.

Dans la technique connue, on réalise le positionnement de l'ouverture d'entrée du canal de remplissage ou trou de pressurisation, avant l'opération de soudage, de manière manuelle et avec une simple surveillance visuelle. Le réglage mécanique à commande manuelle du positionnement du bouchon et du trou de pressurisation ne peut permettre de garantir dans tous les cas un positionnement parfait du trou de pressurisation lors du soudage. Il peut apparaître des possibilités de déréglage ou de blocage du crayon qui se traduisent par un mauvais positionnement. De plus, la surveillance visuelle du positionnement du canal de remplissage ne permet pas non plus d'obtenir un réglage d'une grande efficacité.

La qualité du point de soudure est contrôlée par analyse aux rayons X. Ce contrôle permet de détecter des porosités dans la soudure mais ne permet pas de vérifier que la soudure a été réalisée de manière satisfaisante, quant à sa position et à sa dimension.

En outre, le contrôle doit être réalisé sur un poste séparé de l'installation de remplissage, ce qui rend plus complexes et plus longues les opérations de fabrication du crayon.

Dans le cas de la réalisation de la soudure d'étanchéité par soudage laser, la qualité du soudage laser dépend de la géométrie du chanfrein de la partie d'entrée du canal de remplissage ; en particulier, il est nécessaire de vérifier que le chanfrein présente une ouverture d'entrée dont le diamètre, qui constitue le diamètre maximal du chanfrein, répond à des exigences dimensionnelles extrêmement strictes.

Le but de l'invention est donc de proposer un procédé de contrôle d'une opération de fermeture étanche par soudage d'une ouverture d'extrémité d'un canal de remplissage traversant axialement un bouchon supérieur de fermeture d'une gaine d'un crayon de combustible pour un réacteur nucléaire, la gaine du crayon renfermant une pluralité de pastilles de combustible nucléaire empilées dans la direction axiale de la gaine et deux bouchons de fermeture, l'un des bouchons, ou bouchon supérieur, étant traversé axialement par le canal de remplissage de la gaine du crayon par un gaz inerte et la fermeture étanche par soudage du canal de remplissage du bouchon supérieur étant réalisée après remplissage par du gaz inerte de la gaine, dans une installation de remplissage, par fusion d'une partie centrale de l'extrémité du bouchon supérieur adjacente à l'ouverture du canal de remplissage, ce procédé permettant de contrôler les conditions de mise en oeuvre et la réalisation de la fermeture étanche du bouchon supérieur par soudage, de manière efficace et sans allonger le temps nécessaire à la fabrication du crayon de combustible.

Dans ce but, préalablement à la fermeture étanche du canal de remplissage, le crayon de combustible étant en position de remplissage et de soudage étanche du bouchon supérieur dans l'installation de remplissage, on réalise une prise de vues de l'extrémité du bouchon sur laquelle débouche l'ouverture d'entrée sensiblement circulaire du canal de remplissage, pour obtenir une image sous forme numérisée, on détermine, par analyse de l'image sous forme numérisée, la position du centre de l'ouverture d'entrée circulaire du canal de remplissage par rapport à une position de référence et le diamètre de l'ouverture d'entrée du canal de remplissage,
on en déduit s'il est possible de réaliser le soudage du canal de remplissage,
dans le cas où l'on réalise la fermeture étanche du canal de remplissage par soudage, on effectue une prise de vues de l'extrémité du bouchon supérieur après soudage et on détermine la présence et la position d'une soudure de fermeture étanche du canal de remplissage.

Afin de bien faire comprendre l'invention, on va maintenant décrire, à titre d'exemple, en se référant aux figures jointes en annexe, la mise en oeuvre du procédé de contrôle suivant l'invention, dans le cas où l'on réalise la fermeture étanche du canal de remplissage d'un bouchon supérieur d'un crayon de combustible par soudure au laser.

La figure 1 est une vue en coupe axiale partielle de l'extrémité supérieure d'un crayon de combustible, dans une phase de fabrication précédant le remplissage en gaz inerte et la fermeture étanche du bouchon supérieur.

La figure 2 est une vue en coupe axiale partielle analogue à la vue de la figure 1 montrant la partie d'extrémité supérieure du crayon après la fermeture étanche du bouchon supérieur par soudage.

La figure 3 est une vue schématique d'un poste de remplissage en gaz inerte et de fermeture étanche par soudage laser du bouchon supérieur de crayons de combustible et d'un dispositif de contrôle du soudage des bouchons supérieurs des crayons de combustible.

La figure 4 est une image explicative montrant les opérations successives de recherche effectuées avant soudage pour la mise en oeuvre du procédé suivant l'invention.

La figure 5 est un diagramme donnant le niveau de gris de points d'une colonne ou d'une ligne de l'image obtenu lors du contrôle, avant le soudage du canal de remplissage du bouchon supérieur d'un crayon de combustible.

Les figures 6, 7 et 8 sont des exemples d'images apparaissant sur l'écran du dispositif de contrôle lors de la mise en oeuvre du procédé suivant l'invention avant le soudage du canal de remplissage du bouchon supérieur d'un crayon.

La figure 9 est une image explicative montrant les opérations successives de recherche effectuées lors de la mise en oeuvre du procédé suivant l'invention, après le soudage du canal de remplissage du bouchon supérieur d'un crayon de combustible.

La figure 10 est un diagramme donnant le niveau de gris suivant une ligne ou une colonne de l'image fournie par le dispositif de contrôle, après le soudage du canal de remplissage du bouchon supérieur d'un crayon.

Les figures 11, 12 et 13 sont des exemples d'images apparaissant sur l'écran du dispositif de contrôle, comme résultat du contrôle de la soudure du canal de remplissage d'un bouchon supérieur d'un crayon de combustible.

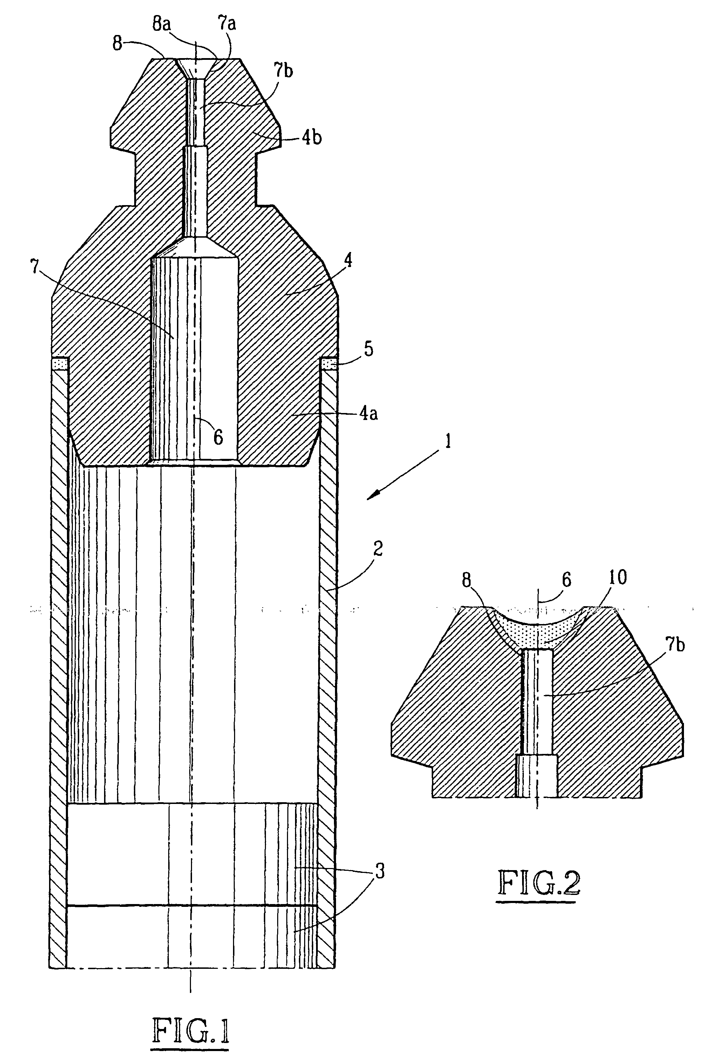

Sur la figure 1 et sur la figure 2, on voit la partie d'extrémité supérieure d'un crayon de combustible pour un réacteur nucléaire à eau sous pression désigné de manière générale par le repère 1.

Le crayon 1 comporte en particulier une gaine tubulaire 2 en alliage de zirconium qui renferme des pastilles de combustible 3 et qui est fermée à son extrémité supérieure représentée sur la figure 1 par un bouchon 4 constituant le bouchon supérieur du crayon de combustible.

Le bouchon 4 est généralement en alliage de zirconium et comporte une partie 4a qui est engagée pratiquement sans jeu dans la partie d'extrémité de l'alésage 2. Après remplissage de la gaine 2, par les pastilles de combustible 3, les bouchons de fermeture de la gaine tels que le bouchon supérieur 4 sont engagés dans les parties d'extrémité de la gaine, la fixation étanche du bouchon étant assurée par une ligne de soudure telle que 5 réalisée par fusion du matériau du bouchon et de la gaine, suivant une ligne circulaire.

Un ressort de maintien des pastilles de combustible (non représenté) est intercalé entre le bouchon supérieur 4 et l'extrémité de la colonne de pastilles de matériau combustible 3.

Le bouchon supérieur 4, qui présente une forme de révolution autour d'un axe 6, comporte une partie d'extrémité 4b opposée, dans la direction de l'axe 6, à son extrémité 4a engagée dans une disposition coaxiale à l'intérieur de la gaine 2. La partie d'extrémité 4b du bouchon 4 présente extérieurement, successivement dans la direction axiale 5, depuis l'extrémité supérieure du bouchon, une partie tronconique, un épaulement et une partie cylindrique suivant laquelle le diamètre du bouchon est minimal. La partie de diamètre minimal du bouchon et l'épaulement permettent d'engager et de fixer les mors d'un outil de préhension, lors d'opérations de manutention du crayon de combustible.

Le bouchon 4 est traversé, dans la direction de l'axe 6, suivant toute sa longueur, par un canal 7 qui sera désigné par la suite comme canal de remplissage, ce canal 7 permettant le remplissage de la gaine du crayon par un gaz inerte sous pression, comme il sera expliqué par la suite. Le canal de remplissage 7 du bouchon 4 comporte plusieurs parties successives dont les diamètres sont généralement décroissants depuis l'extrémité 4a du bouchon engagée dans la gaine 2 vers la partie d'extrémité externe 4b du bouchon.

A son extrémité supérieure ou extrémité externe, le canal 7 comporte une partie terminale 7a de forme tronconique ou queusot évasée de bas en haut, c'est à dire de l'intérieur vers l'extérieur du bouchon qui débouche sur la surface d'extrémité supérieure 8 du bouchon suivant une ouverture d'entrée circulaire dont le centre se trouve sur l'axe 6 commun au bouchon et à la gaine 2.

Le queusot 7a du canal 7 suivant lequel on réalise la fermeture du canal 7 par une soudure assure la jonction entre une partie 7b du canal 7 à section minimale et l'ouverture circulaire d'entrée du canal 7 sur la surface d'extrémité supérieure 8 du bouchon 4.

La partie 7b à faible diamètre peut présenter un diamètre de l'ordre de 0,6 mm et l'ouverture d'entrée circulaire de la partie terminale tronconique 7a, un diamètre de l'ordre de 1,3 mm.

Comme représenté sur la figure 2, après avoir réalisé le remplissage de la gaine du crayon par un gaz inerte sous pression tel que l'hélium, on assure la fermeture étanche du canal 7 dans sa partie terminale supérieure, par une soudure 10 obtenue par fusion du matériau du bouchon dans la zone centrale de sa partie d'extrémité supérieure, à la périphérie du queusot 7a et constituée, par exemple, de trois pulses de soudage laser.

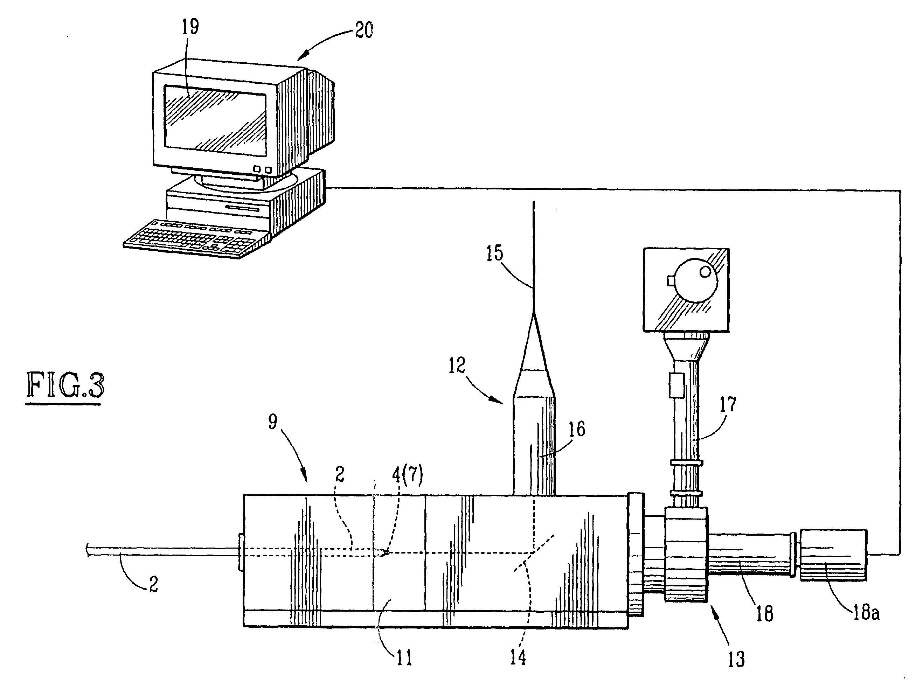

Comme il est visible sur la figure 3, le remplissage et la fermeture étanche du bouchon supérieur 4 du crayon combustible 2 sont réalisés dans une installation de remplissage et de soudage 9.

L'installation de remplissage et de soudage comporte principalement une enceinte dont une paroi comporte une ouverture de passage d'un crayon de combustible 2 dans une disposition horizontale, l'extrémité supérieure du crayon étant introduite dans l'enceinte, de manière que le bouchon supérieur 4 du crayon de combustible 2 vienne en engagement avec une vanne 11 dont, l'obturateur permet de fermer ou d'ouvrir l'extrémité terminale du canal de remplissage du bouchon.

L'enceinte de l'installation de remplissage et de soudage 9 comporte une partie située à l'opposé de la partie d'introduction du crayon 2 sur les parois de laquelle sont montés un dispositif de soudage à faisceau laser 12 et un ensemble optique 13 permettant de réaliser le positionnement du faisceau laser pour réaliser le soudage de fermeture étanche du canal de remplissage du bouchon supérieur 4 du crayon combustible 2 et qui est utilisé également pour la mise en oeuvre du procédé de contrôle par analyse d'image optique suivant l'invention.

A l'intérieur de la seconde partie de l'enceinte 9 est disposé un miroir 14 de renvoi et de focalisation du faisceau laser de soudage émis par le dispositif de soudage laser 12. Le dispositif 12 comporte une fibre optique 15 reliée à un générateur laser non représenté et un collimateur 16, de manière à faire parvenir, par l'intermédiaire du miroir 14 de renvoi et de focalisation, un faisceau laser de direction axiale, sur la partie d'extrémité du canal de remplissage 7 constituant le queusot.

Pour réaliser la fermeture étanche du canal de remplissage par une soudure 10 dans des conditions satisfaisantes, le faisceau laser doit être dirigé de manière précise sur le centre de l'ouverture circulaire d'entrée du canal 7 de remplissage du bouchon supérieur 4. Pour réaliser le réglage de la position du faisceau laser de soudage, on utilise l'ensemble optique d'éclairage et de réglage 13 qui comporte un dispositif d'éclairage 17 et un ensemble optique de visée comportant un réticule, de manière à repérer la direction suivant laquelle est réalisé le tir laser.

Dans le cas des procédés de réglage du soudage suivant l'art antérieur, le réglage de la position du bouchon supérieur du crayon est réalisé manuellement et vérifié de manière visuelle.

Dans le cas du procédé suivant l'invention, on utilise le dispositif d'éclairage 17 du moyen de visée et de réglage du tir laser, pour effectuer, sur des images numérisées, le contrôle de la position du centre de l'ouverture d'entrée du canal de remplissage par rapport au faisceau laser et de la conformité de l'ouverture d'entrée, pour déterminer si le soudage du canal de remplissage, après remplissage du crayon par de l'hélium sous pression, peut être effectué dans des conditions satisfaisantes.

On réalise également le contrôle de la soudure constituée par des pulses de soudage, par analyse d'images numérisées.

Pour cela, on associe à une optique 18 dirigée dans l'axe de l'enceinte 9 suivant lequel est engagé le crayon de combustible 2, une caméra numérique 18a reliée à un micro-ordinateur 20 comportant un écran d'affichage d'images 19. Le micro-ordinateur 20 comporte une carte d'acquisition vidéo et une carte d'entrée/sortie numérique permettant la mise en communication du micro-ordinateur 20 avec un automate assurant la gestion du dispositif 12 de soudage par laser.

Le micro-ordinateur 20 reçoit de l'automate, par l'intermédiaire de la carte d'entrée/sortie numérique, des ordres de contrôle et des verdicts établis à partir des résultats du contrôle sont envoyés par le micro-ordinateur 20 à l'automate de commande du dispositif de soudage par laser 12. Des informations concernant le crayon et les conditions de soudage sont transmises au micro-ordinateur 20 par l'automate du dispositif de soudage par laser 12.

Une première étape du procédé de contrôle de la fermeture étanche par soudage du canal de remplissage du bouchon supérieur d'un crayon consiste à déterminer la position et la dimension, c'est-à-dire le diamètre de l'ouverture d'entrée 8a du canal de remplissage 7, constituée par le contour circulaire suivant lequel le canal de remplissage 7 débouche sur la surface d'extrémité 8 du bouchon supérieur 4 du crayon. Cette ouverture d'entrée constitue l'extrémité de grand diamètre du chanfrein de la partie terminale 7a du canal de remplissage.

Le contrôle est réalisé sur l'installation de remplissage et de soudage qui vient d'être décrite, pendant une phase au cours de laquelle on réalise le remplissage du crayon de combustible par de l'hélium sous pression, la vanne 11 étant ouverte.

On réalise, à l'aide de l'optique 18 et de la caméra numérique 18a, une prise de vue de la surface d'extrémité 8 du bouchon et de l'ouverture d'entrée 8a de la partie terminale 7a du canal de remplissage, l'image optique obtenue étant numérisée par la caméra de numérisation 18a et transmise sous forme numérisée au micro-ordinateur de contrôle 20.

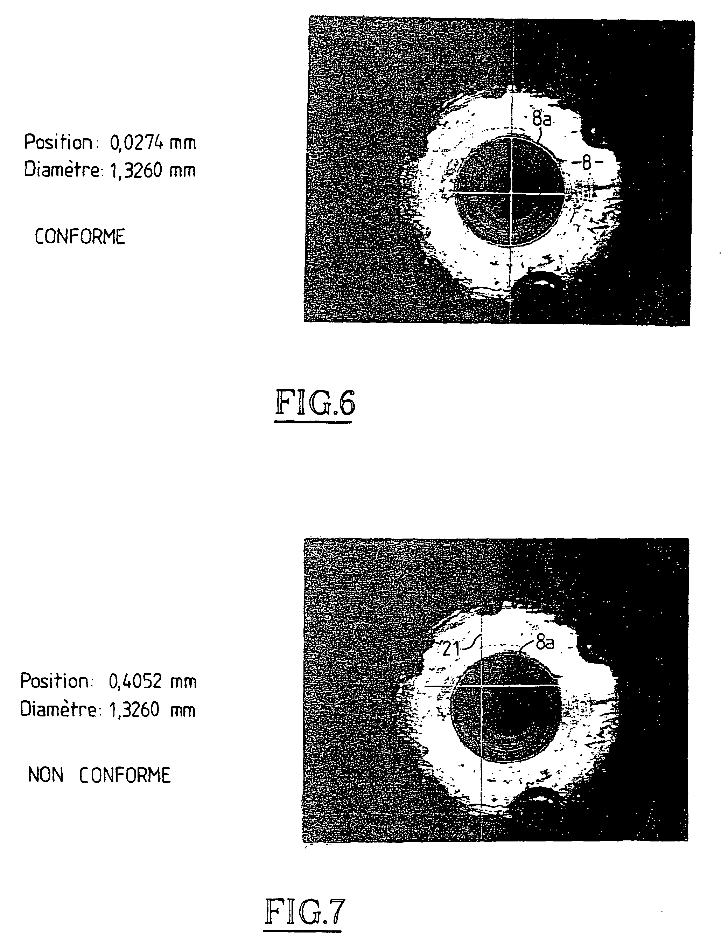

L'image obtenue peut être rendue visible sur l'écran 19 du micro-ordinateur 20, comme représenté, par exemple, sur les figures 6, 7 et 8.

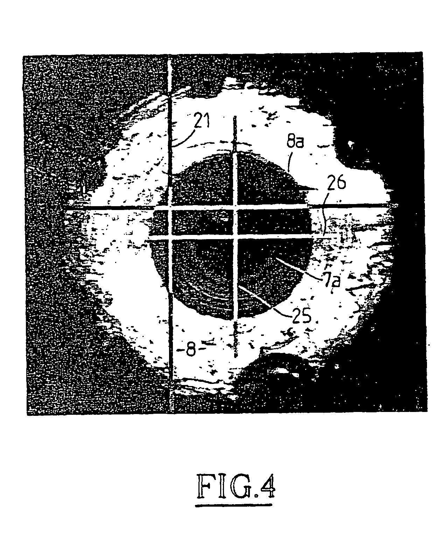

Les opérations de recherche effectuées sur l'ouverture circulaire du queusot seront expliquées en regard de la figure 4.

Du fait de l'éclairage de l'extrémité du bouchon supérieur du crayon dans une direction axiale, la surface d'extrémité 8 du crayon apparaît comme une zone claire et la partie terminale 7a du canal de remplissage 7 comme une zone sombre, la zone claire et la zone sombre étant séparées l'une de l'autre par une ligne sensiblement circulaire 8a constituant l'extrémité d'entrée du queusot.

L'analyse d'une image numérique de la partie d'extrémité du bouchon supérieur permet de déterminer la position du centre de l'ouverture circulaire 8a par rapport au centre d'une mire paramétrable matérialisant la position du faisceau laser avec lequel on réalise la fermeture étanche par soudage du canal de remplissage 7. De manière idéale, la position de la mire et la position du centre de l'ouverture d'entrée du bouchon doivent être confondues.

La mire 21 comporte un axe vertical et un axe horizontal qui définissent le centre de la mire. Son positionnement est réalisé visuellement, lorsque le poste de soudage laser est correctement réglé.

On effectue sur l'image la recherche des bords de l'ouverture 8a en suivant les axes horizontal et vertical de la mire de référence 21.

On effectue tout d'abord une recherche des bords du trou 8a suivant l'axe horizontal de la mire 21 ou premier axe. On choisit un nombre N qui correspond au nombre de lignes de l'image qui seront utilisées de part et d'autre de la référence 21 pour définir une ligne moyenne suivant laquelle on va effectuer la recherche des bords de l'ouverture 8a.

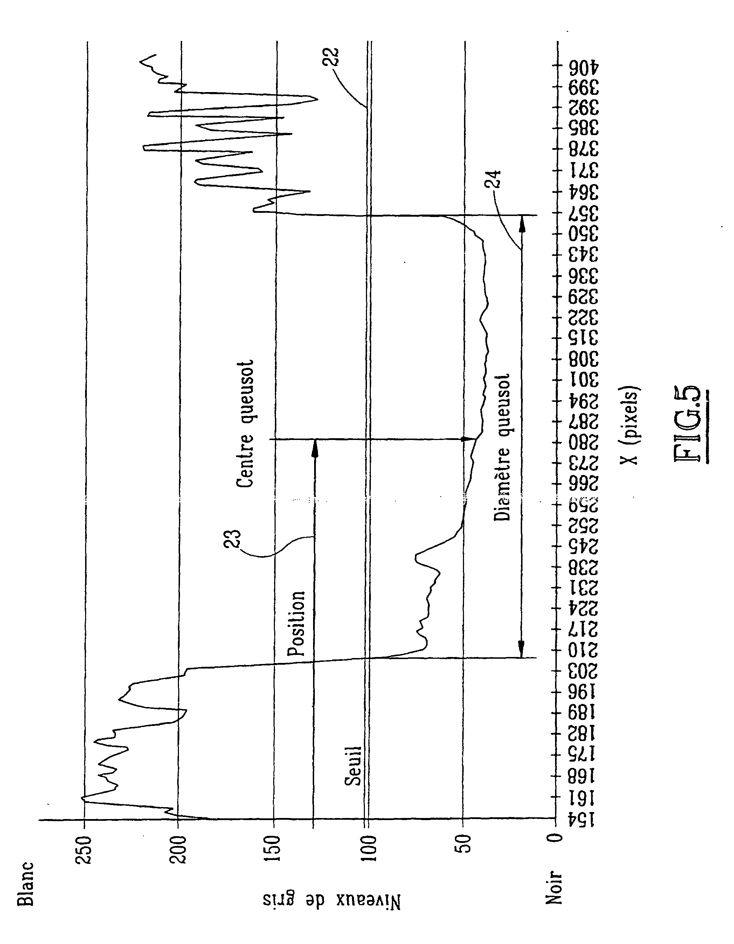

Sur la figure 5, on a représenté les variations des niveaux de gris entre le noir et le blanc, suivant la ligne moyenne déterminée précédemment. Les distances sur l'axe des abscisses, c'est-à-dire suivant la ligne de l'image sont exprimées en points de l'image ou pixels.

On choisit une valeur de seuil paramétrée.

La valeur de seuil est représentée par la droite 22 sur la figure 5.

Le bord droit de l'image puis le bord gauche sont déterminés suivant la ligne moyenne et en comparant les pixels à la valeur de seuil.

A partir du bord droit et du bord gauche définis sur le diagramme, on détermine la position du centre du trou du queusot, par exemple par rapport à un bord de l'image comme représenté par le segment 23 et le diamètre du queusot comme représenté par le segment 24.

On effectue alors une recherche des bords du trou du queusot suivant un second axe constitué par l'axe vertical 25 (voir figure 4) passant par le centre précédemment défini ou premier centre.

On effectue la recherche des bords de l'ouverture d'entrée du queusot de la même manière que précédemment mais en utilisant les colonnes de l'image à la place des lignes. On définit ainsi un second centre de l'ouverture d'entrée circulaire et le diamètre suivant l'axe vertical.

On effectue ensuite la recherche des bords de l'ouverture d'entrée circulaire 8a du queusot, suivant l'axe horizontal 26 ou troisième axe passant par le second centre défini par la recherche sur l'axe vertical. On en déduit la position du centre de l'ouverture circulaire 8a et le diamètre de l'ouverture circulaire suivant l'axe horizontal, cette troisième détermination du centre de l'ouverture fournissant le centre réel pris en compte.

On vérifie que les valeurs obtenues pour le diamètre suivant l'axe vertical 25 et suivant l'axe horizontal 26 sont cohérentes, c'est-à-dire ne diffèrent pas d'une valeur supérieure à une valeur de seuil choisie.

On réalise alors la conversion des pixels en millimètres et on compare le diamètre de l'ouverture circulaire 8a à des valeurs de seuil définies par les paramètres "diamètres minimal et diamètre maximal" de l'ouverture 8a.

On compare la position du centre de l'ouverture circulaire 8a définie par sa distance au centre de la mire 21, à une valeur de seuil correspondant à un paramètre "tolérance de position du centre". On affiche les résultats sur l'écran du micro-ordinateur 20, comme représenté sur les figures 6, 7 et 8. Dans chacun des cas, on affiche une première valeur en millimètre correspondant à la position du centre de l'ouverture circulaire 8a, une seconde valeur en millimètre correspondant au diamètre de l'ouverture circulaire 8a et un verdict indiquant la conformité ou la non-conformité des valeurs mesurées. Dans le cas d'une conformité des valeurs mesurées, un ordre d'exécution est transmis à l'automate du dispositif de soudage 12 par faisceau laser. Dans le cas contraire, un ordre de blocage est transmis.

Dans le cas de la figure 6, les valeurs relevées sont conformes, la distance entre le centre de l'ouverture 8a et le centre de la mire étant inférieure à une valeur de seuil choisie et le diamètre mesuré compris entre le diamètre minimal et le diamètre maximal acceptables.

Dans le cas de la figure 7, l'ouverture 8a est décalée par rapport au centre de la mire 21, de sorte que la distance entre le centre de l'ouverture 8a et le centre de la mire est supérieure à la valeur de seuil choisie. On émet donc un verdict de non-conformité. En revanche, le diamètre dans ce cas est compris entre les valeurs de seuil minimale et maximale.

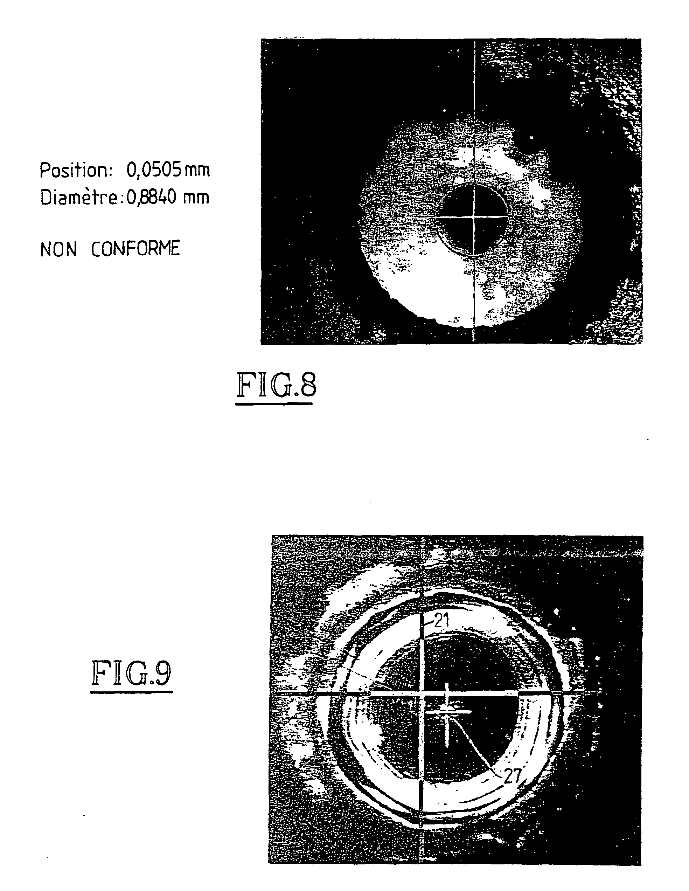

Dans le cas de la figure 8, le diamètre mesuré sur l'image de l'ouverture 8a est inférieur à la valeur de seuil minimale. Un verdict de non-conformité est émis. De plus, la position du centre de l'ouverture 8a est légèrement décalée par rapport à la position de la mire, la distance entre le centre de l'ouverture 8a et le centre de la mire est cependant inférieure à la valeur de seuil.

Un verdict de défaut est également émis lorsqu'il n'a pas été possible de repérer les bords de l'ouverture 8a au cours des recherches telles que décrites précédemment.

Dans le cas d'un verdict de conformité, un ordre d'exécution du soudage est envoyé à l'automate du dispositif de soudage par laser 12. Le soudage est effectué par le laser pulsé qui réalise la fusion du métal du bouchon supérieur dans une zone périphérique de la partie terminale 7a ou queusot du canal de remplissage 7. On réalise une pulse de soudage obturant l'entrée de la partie 7b à faible diamètre du canal de remplissage 7, puis deux pulses successives pour constituer la soudure 10.

La soudure 10 présente sur sa surface supérieure une forme en cuvette ou cratère due à la coulée et au dépôt du métal dans la partie centrale creuse du bouchon.

Après réalisation du soudage, le crayon de combustible étant en position dans l'installation de remplissage et de soudage 9, on peut effectuer immédiatement un contrôle de la présence et des caractéristiques des pulses de soudage.

Pour cela, on éclaire la surface d'extrémité du crayon 8 en utilisant l'installation d'éclairage 17 en envoyant sur la surface du crayon de la lumière dans une direction axiale et on réalise une prise de vues de la surface d'extrémité 8 du crayon en utilisant l'optique 8 et la caméra numérique 8a.

L'image numérisée est transmise au micro-ordinateur 20.

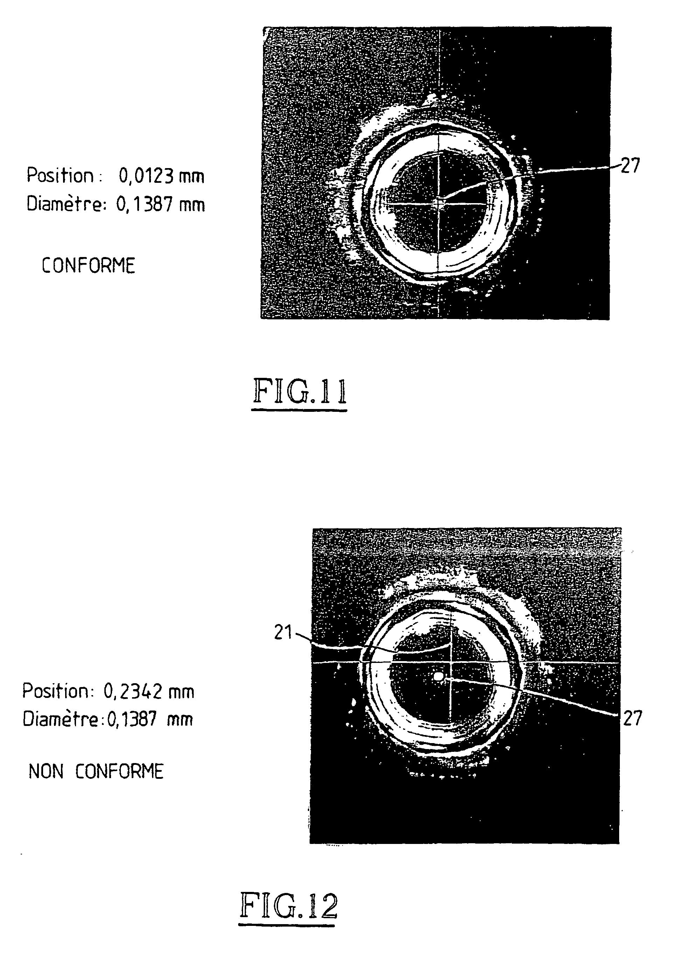

L'image de la partie d'extrémité du bouchon peut être affichée sur l'écran, comme représenté par exemple sur les figures 11, 12 et 13.

Les opérations de recherche effectuées sur la pulse de soudage seront expliquées en regard de la figure 9.

Sur l'image, apparaissent en clair la surface d'extrémité 8 du bouchon et le reflet 27 produit par la lumière renvoyée par le cratère de la partie centrale de la pulse de soudage 10.

Par analyse de l'image numérisée, on détermine la distance du centre du reflet 27 au centre de la mire paramétrable 21 qui est figurée sur l'écran.

On compare la position du centre du reflet 27, c'est-à-dire la distance de ce centre au centre de la mire, à un paramètre "tolérance de position du centre" et le diamètre du reflet à des valeurs de seuil définies par des paramétres "diamètres maximal et minimal".

On commence par la constitution de lignes moyennes horizontales autour de la référence, puis on recherche un nombre maximal de pixels supérieurs au seuil qui permettent de se positionner dans le reflet.

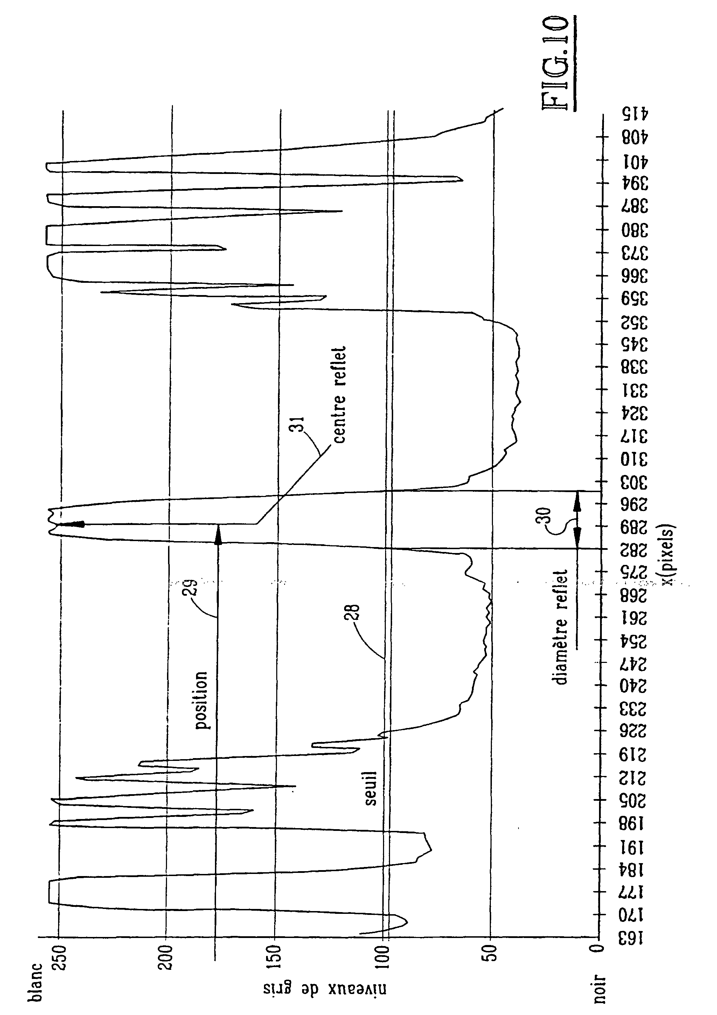

On effectue ensuite la recherche des bords du reflet 27 suivant un premier axe constitué par l'axe horizontal passant par la position trouvée précédemment. Pour cela, on définit une ligne moyenne, de la manière indiquée plus haut et on trace un diagramme représentatif de la variation des niveaux de gris suivant la ligne moyenne, comme représenté sur la figure 10.

On définit une valeur de seuil représentée par la droite horizontale 28 sur la figure 10.

On effectue une recherche du bord droit et du bord gauche du reflet en comparant les pixels successifs suivant la ligne moyenne à la valeur de seuil. On calcule une première position du centre du reflet par rapport à un bord de l'image, cette position étant représentée par le segment 29 sur la figure 10.

On calcule également un premier diamètre du reflet entre les bords droit et gauche, ce diamètre étant représenté par le segment 30 sur la figure 10.

On détermine les bords du reflet suivant un second axe constitué par une ligne verticale passant par le premier centre défini précédemment en effectuant une recherche identique à la précédente mais sur les colonnes de l'image.

On vérifie la cohérence des valeurs obtenues pour le diamètre du reflet 27 suivant le premier et le second axes.

On effectue une conversion des pixels en millimètres et on compare le diamètre aux valeurs de seuil "diamètres minimal et maximal" et la position au paramètre "tolérance de position du centre".

On affiche les résultats sur l'écran du micro-ordinateur, comme représenté sur les figures 11, 12 et 13.

Dans chacun des cas, l'une des informations affichées sous forme numérique concerne la position et l'autre le diamètre du reflet. La position du reflet correspond à la distance en millimètre entre le centre du reflet et le centre de la mire paramétrable constituant la référence. La position du centre du reflet correspond à la position du centre de la pulse de soudage.

Dans le cas de la figure 11, aussi bien la position que le diamètre du reflet sont satisfaisants. On affiche alors un verdict de conformité.

Dans le cas de la figure 12, le centre du reflet 27 est décalé par rapport au centre de la référence 21 d'une valeur supérieure à la valeur de seuil prédéterminée.

Un verdict de non-conformité est donc émis. Le diamètre du reflet est cependant satisfaisant, c'est-à-dire compris entre la valeur minimale et la valeur maximale admise.

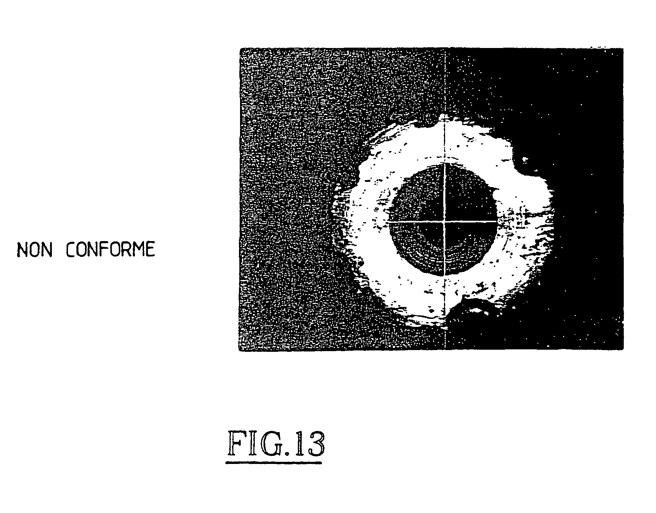

Dans le cas de la figure 13, aucun reflet 27 n'apparaît, ce qui traduit une absence du point de soudure dans le queusot du canal de remplissage 7 du bouchon supérieur du crayon. Un verdict de non-conformité est émis.

Dans le cas où un verdict de conformité est émis, le crayon de combustible peut être considéré comme correctement soudé et peut être accepté en sortie de fabrication.

Le procédé suivant l'invention permet également de déterminer sur quelle profondeur a été effectué le soudage et en particulier, lorsque seule la première pulse de soudage a été réalisée, on observe un très petit reflet provenant du fond du queusot. Dans ce cas, on détecte facilement le manque des seconde et troisième pulses de soudage à partir de la mesure du diamètre du reflet.

L'examen du diagramme donnant les niveaux de gris suivant une ligne de référence traversant le reflet de la pulse de soudage permet également de déterminer la position du centre de la cuvette de la pulse de soudage qui est désigné par le repère 31 sur la figure 10.

L'analyse des images optiques effectuée par le micro-ordinateur 20 est effectuée grâce à un logiciel écrit en visual basic sous Windows NT.

L'invention permet de réaliser, dans l'installation de remplissage et de fermeture étanche du crayon, un contrôle du diamètre de l'ouverture du queusot du bouchon supérieur du crayon et de son positionnement par rapport au faisceau laser de soudage, de manière à déterminer s'il est possible ou non d'effectuer la fermeture étanche par soudage du crayon rempli d'hélium sous pression.

L'invention permet également de vérifier dans un second temps, que le point de soudure ou pulse de soudage a été réalisé de manière conforme. Toutes les opérations sont effectuées sur l'installation de remplissage et de soudage, en temps masqué.

Le procédé suivant l'invention permet d'éviter toute opération de manutention des crayons entre l'installation de remplissage et de fermeture étanche et un poste de contrôle et le verdict relatif à la conformité de la pulse de soudage est disponible dès la fin de l'opération de soudage.

Les informations concernant l'opération dans son ensemble (positionnement, soudage et contrôle) peuvent être sauvegardées sur disque dur et sont exploitables par la suite sous forme de bases de données.

Enfin, l'éclairage utilisé pour les prises de vues est un éclairage standard qui peut être obtenu par des moyens disponibles sur le marché.

L'invention ne se limite pas strictement aux modes de réalisation qui ont été décrits.

On peut réaliser le traitement des images numérisées de la surface d'extrémité du bouchon supérieur avant et après soudage, par des méthodes différentes de celles qui ont été décrites, par exemple pour la détermination des bords de l'ouverture d'entrée du canal de remplissage et du reflet de la pulse de soudage.

Enfin, le procédé suivant l'invention s'applique dans le cas de tout crayon de combustible nucléaire comportant un bouchon supérieur traversé par un canal de remplissage du crayon par un gaz inerte sous pression.

## Revendications

1. Procédé de contrôle d'une opération de fermeture étanche par soudage d'une ouverture d'extrémité (8a, 7a) d'un canal de remplissage (7) traversant axialement un bouchon supérieur (4) de fermeture d'une gaine (2) d'un crayon de combustible (1) pour un réacteur nucléaire, la gaine (2) du crayon (1) renfermant une pluralité de pastilles (3) de combustible nucléaire empilées dans la direction axiale de la gaine (2) et deux bouchons de fermeture, l'un des bouchons ou bouchon supérieur (4) étant traversé par le canal de remplissage (7) de la gaine (2) du crayon (1) par un gaz inerte sous pression et la fermeture étanche par soudage du canal de remplissage (7) du bouchon supérieur (4) étant réalisée après remplissage par le gaz inerte sous pression de la gaine (2), dans une installation de remplissage (9), par fusion d'une partie centrale (7a) d'extrémité du bouchon (4) adjacente à l'ouverture (8a) du canal de remplissage, **caractérisé par le fait que**, préalablement à la fermeture étanche du canal de remplissage (7), le crayon (1) étant en position de remplissage et de soudage étanche du bouchon supérieur (4) dans l'installation de remplissage (9), on réalise une prise de vues de la surface d'extrémité (8) du bouchon (4) sur laquelle débouche le canal de remplissage (7) par l'ouverture d'entrée sensiblement circulaire (8a), pour obtenir une image sous forme numérisée, on détermine, par analyse de l'image sous forme numérisée, la position du centre de l'ouverture d'entrée circulaire (8a) du canal de remplissage (7) par rapport à une position de référence (21) et le diamètre de l'ouverture d'entrée (8a) du canal de remplissage (7),
- on en déduit s'il est possible de réaliser le soudage du canal de remplissage (7),
- dans le cas où l'on réalise la fermeture étanche du canal de remplissage (7) par soudage, on effectue une prise de vues de l'extrémité du bouchon (4) après soudage et on détermine la présence et la position d'un point de soudure (10) de fermeture étanche du canal de remplissage (7).

2. Procédé suivant la revendication 1, **caractérisé par le fait :**
- **que** la position de référence (21) est constituée par le centre d'un réticule comportant un axe horizontal et un axe vertical, la position du centre du réticule (21) correspondant à une position de réglage d'un moyen de soudage (12) tel qu'un faisceau laser pour réaliser la fermeture étanche par soudage du canal de remplissage (7) du bouchon (4),
- **qu'**on recherche les bords de l'ouverture d'entrée (8a) du canal de remplissage (7) sur la surface d'extrémité (8) du bouchon (4) suivant un premier axe du réticule (21),
- **qu'**on en déduit une première position du centre de l'ouverture circulaire d'entrée (8a) du canal de remplissage (7) et une première valeur du diamètre de l'ouverture d'entrée (8a),
- **qu'**on recherche les bords de l'ouverture suivant un second axe perpendiculaire au premier axe du réticule passant par le centre défini précédemment,
- **qu'**on en déduit une seconde position du centre de l'ouverture circulaire (8a) du canal de remplissage (7) et un seconde valeur du diamètre de l'ouverture d'entrée circulaire (8a) du canal de remplissage (7),
- **qu'**on recherche, suivant un troisième axe perpendiculaire au second axe passant par le second centre défini précédemment, les bords de l'ouverture circulaire (8a),
- **qu'**on en déduit une troisième position du centre de l'ouverture circulaire (8a) et une troisième valeur du diamètre de l'ouverture circulaire (8a), le troisième centre de l'ouverture circulaire (8a) étant considéré comme centre réel de l'ouverture (8a),
- **qu'**on compare le second et le troisième diamètre l'un avec l'autre pour en déduire la cohérence des valeurs des second et troisième diamètres considérés comme diamètres de l'ouverture circulaire (8a),
- **qu'**on détermine la distance entre la troisième position déterminée du centre de l'ouverture (8a) et le centre du réticule (21), et
- **qu'**on compare la distance calculée entre les centres de l'ouverture circulaire (8a) et du réticule (21) ainsi que la valeur calculée du diamètre de l'ouverture circulaire d'entrée (8a) du canal de remplissage (7) à des valeurs de seuil pour déterminer la conformité de l'ouverture d'entrée (8a) du canal de remplissage et de son positionnement et la possibilité d'effectuer la fermeture étanche par soudage.

3. Procédé suivant la revendication 2, **caractérisé par le fait qu'**on effectue la recherche des bords de l'ouverture d'entrée (8a) du canal de remplissage (7) suivant chacun des axes, à partir d'un diagramme donnant les niveaux de gris suivant une ligne ou colonne moyenne de l'image numérisée, c'est-à-dire les niveaux de gris moyens suivant N lignes ou colonnes parallèles à l'axe suivant lequel on effectue la recherche et situées de part et d'autre de cet axe.

4. Procédé suivant la revendication 3, **caractérisé par le fait qu'**on détermine les bords de l'ouverture circulaire d'entrée (8a) du canal de remplissage (7) en utilisant une valeur de seuil des niveaux de gris constituant une moyenne entre les niveaux de gris de l'image du canal de remplissage et les niveaux de gris de la surface (8) du bouchon supérieur (4) autour de l'ouverture circulaire d'entrée (8a) du canal de remplissage.

5. Procédé suivant la revendication 1, **caractérisé par le fait qu'**après réalisation de la fermeture étanche du canal de remplissage (7) du bouchon supérieur (4), par exemple par une pulse de soudage laser (10), on recherche sur l'image numérisée de la surface d'extrémité (8) du bouchon, un reflet (27) de la pulse de soudage (10) présentant une partie centrale en forme de cratère réfléchissant de la lumière dirigée axialement et on détermine la position du centre et la dimension du reflet (27).

6. Procédé selon la revendication 5, **caractérisé par le fait qu'**on détermine la position d'un centre du reflet (27) par rapport à un centre d'un réticule (21) défini par deux axes perpendiculaires respectivement horizontal et vertical sur l'image numérisée correspondant à une position de soudage ainsi que le diamètre du reflet (27), et qu'on compare la distance du centre du reflet (27) au centre du réticule (21) et le diamètre calculé du reflet (27) à des valeurs de seuil pour définir si le bouchon supérieur (4) du crayon combustible (1) est conforme après soudage.

7. Procédé suivant la revendication 6, **caractérisé par le fait qu'**on recherche les bords du reflet (27), suivant un premier axe du réticule (21),
qu'on en déduit une première position du centre et une première valeur du diamètre du reflet (27),
qu'on recherche suivant un second axe perpendiculaire au premier passant par le premier centre du reflet (27) défini précédemment, les bords du reflet (27),
qu'on en déduit une seconde position du centre et une seconde valeur du diamètre du reflet (27),
qu'on compare le premier et le second diamètre pour vérifier la cohérence des valeurs obtenues,
qu'on détermine la distance entre le second centre du reflet (27) et le centre du réticule (21), et
qu'on compare la distance entre le centre du reflet (27) et le centre du réticule (21) et le diamètre calculé du reflet (27) à des valeurs de seuils pour déterminer la conformité de la réalisation de la fermeture étanche par soudage du canal de remplissage du bouchon supérieur (4) du crayon (1).

8. Procédé suivant la revendication (7), **caractérisé par le fait qu'**on réalise la recherche des bords du reflet (27) suivant chacun du premier et du second axes, en déterminant un diagramme donnant les niveaux de gris suivant une ligne moyenne respectivement parallèle au premier et au second axes correspondant à une moyenne des niveaux de gris suivant plusieurs lignes ou colonnes de l'image numérisée parallèles respectivement au premier ou au second axes et disposées de part et d'autre du premier ou du second axes.

## Patentansprüche

1. Verfahren zur Kontrolle einer Schweißoperation zum dichten Verschließen einer Endöffnung (8a, 7a) eines Einfüllkanals (7), der ein oberes Verschlussstück (4) einer Hülse (2) eines Kemreaktor-Brennstabs (1) axial durchquert, wobei die Hülse (2) des Brennstabs (1) eine Vielzahl Brennstofftabletten (3), gestapelt in der axialen Richtung der Hülse (2), und zwei Verschlussstücke umschließt, wobei eines der Verschlussstücke (4), oder oberes Verschlussstück, von dem Einfüllkanal (7) eines inerten Druckgases durchquert wird und der dichte Verschluss des Einfüllkanals (7) des oberen Verschlussstücks (4) nach Befüllung der Hülse (2) mit dem inerten Druckgas in einer Einfüllanlage (9) mittels Verschweißung realisiert wird, durch Schmelzen eines zentralen, an die Öffnung (8a) des Einfüllkanals angrenzenden Endteils (7a) des Verschlussstücks (4),
**dadurch gekennzeichnet, dass** - vor dem dichten Verschließen des Einfüllkanals (7), wenn sich der Brennstab (1) in der Einfüllanlage (9) in der Position zum Befüllen und zum dichten Verschweißen des Verschlussstücks (4) befindet -, man Aufnahmen macht von der Endfläche (8) des Verschlussstücks (4), in der der Einfüllkanal (7) durch die im Wesentlichen kreisförmige Eingangsöffnung (8a) mündet, um ein Bild in digitalisierter Form zu erhalten, man durch Analyse des digitalisierten Bildes die Position des Mittelpunkts der kreisförmigen Eingangsöffnung (8a) des Einfüllkanals (7) im Verhältnis zu einer Bezugsposition (21) bestimmt und den Durchmesser der Eingangsöffnung (8a) des Einfüllkanals (7) bestimmt,
- man davon ableitet, ob es möglich ist, die Verschweißung des Einfüllkanals (7) zu realisieren,
- man im Falle der Realisierung des dichten Verschlusses des Einfüllkanals (7) durch Verschweißung nach der Verschweißung Aufnahmen von dem Ende des Verschlussstücks (4) macht und das Vorhandensein und die Position eines Schweißpunkts (10) des dichten Verschlusses des Einfüllkanals (7) bestimmt.

2. Verfahren nach Anspruch 1, **dadurch gekennzeichnet:**
- **dass** die Bezugsposition (21) durch den Mittelpunkt eines Strichkreuzes mit einer horizontalen und einer vertikalen Achse gebildet wird, wobei die Position des Zentrums bzw. Mittelpunkts des Strichkreuzes (21) einer Einstellposition einer Schweißeinrichtung (12), zum Beispiel einem Laserstrahl, entspricht, um den dichten Verschluss durch Verschweißung des Einfüllkanals (7) des Verschlussstücks (4) zu realisieren,
- **dass** man die Ränder der Eingangsöffnung (8a) des Einfüllkanals (7) auf der Endoberfläche (8) des Verschlussstücks (4) auf einer ersten Achse des Strichkreuzes (21) sucht,
- **dass** man davon eine erste Position des Mittelpunkts der kreisförmigen Eingangsöffnung (8a) des Einfüllkanals (7) und einen ersten Wert des Durchmessers der Eingangsöffnung (8a) ableitet,
- **dass** man die Ränder der Öffnung auf einer zu der ersten Achse senkrechten zweiten Achse des Strichkreuzes sucht, die durch den vorhergehend definierten Mittelpunkt verläuft,
- **dass** man davon eine zweite Position des Mittelpunkts der kreisförmigen Eingangsöffnung (8a) des Einfüllkanals (7) und einen zweiten Wert des Durchmessers der Eingangsöffnung (8a) des Einfüllkanals (7) ableitet,
- **dass** man die Ränder der Öffnung (8a) auf einer zu der zweiten Achse senkrechten dritten Achse des Strichkreuzes sucht, die durch den vorhergehend definierten zweiten Mittelpunkt verläuft,
- **dass** man davon eine dritte Position des Mittelpunkts der kreisförmigen Öffnung (8a) und einen dritten Wert des Durchmessers der kreisförmigen Öffnung (8a) ableitet, wobei der dritte Mittelpunkt der kreisförmigen Öffnung (8a) als tatsächlicher Mittelpunkt der Öffnung (8a) betrachtet wird,
- **dass** man den zweiten und den dritten Durchmesser miteinander vergleicht, um daraus die Kohärenz der als Durchmesser der kreisförmigen Öffnung (8a) betrachteten Werte des zweiten und des dritten Durchmessers abzuleiten,
- **dass** man den Abstand zwischen der bestimmten dritten Position des Mittelpunkts der Öffnung (8a) und des Mittelpunkts des Strichkreuzes (21) bestimmt, und
- **dass** man den berechneten Abstand zwischen den Mittelpunkten der kreisförmigen Öffnung (8a) und des Strichkreuzes (21) sowie den berechneten Wert des Durchmessers der kreisförmigen Eingangsöffnung (8a) des Einfüllkanals (7) mit Schwellenwerten vergleicht, um die Konformität der Eingangsöffnung (8a) des Einfüllkanals und ihrer Positionierung und die Möglichkeit, den dichten Verschluss durch Verschweißung zu realisieren, zu bestimmen.

3. Verfahren nach Anspruch 2, **dadurch gekennzeichnet, dass** man die Suche der Ränder der Eingangsöffnung (8a) des Einfüllkanals (7) auf jeder der Achsen aufgrund eines Diagramms durchführt, das die Graupegel längs einer mittleren Zeile oder Spalte des digitalisierten Bildes liefert, das heißt die mittleren Graupegel von N Zeilen oder Spalten, die parallel sind zu der Achse, gemäß der man die Suche durchführt, und die sich beiderseits dieser Achse befinden.

4. Verfahren nach Anspruch 3, **dadurch gekennzeichnet, dass** man die Ränder der kreisförmigen Eingangsöffnung (8a) des Einfüllkanals (7) bestimmt, indem man einen Schwellenwert der Graupegel benutzt, der einen Mittelwert zwischen den Graupegeln des Bilds des Einfüllkanals und den Graupegeln der Oberfläche (8) des oberen Verschlussstücks (4) um die kreisförmige Eingangsöffnung (8a) des Einfüllkanals herum bildet.

5. Verfahren nach Anspruch 3, **dadurch gekennzeichnet, dass** man nach Realisierung des dichten Verschlusses des Einfüllkanals (7) des oberen Verschlussstücks (4), zum Beispiel durch einen Laserschweißimpuls (10), in dem digitalisierten Bild der Endoberfläche (8) des Verschlussstücks einen Reflex (27) des Schweißimpulses (10) sucht, dessen kraterförmiger zentraler Teil axial ausgerichtetes Licht reflektiert, und man die Position des Mittelpunkts und die Dimension des Reflexes (27) bestimmt.

6. Dass man die Position des Mittelpunkts des Reflexes (27) im Verhältnis zu einem Mittelpunkt eines Strichkreuzes (21), definiert durch zwei zueinander senkrechte Achsen, horizontal beziehungsweise vertikal auf dem digitalisierten Bild, einer Schweißposition entsprechend, und den Durchmesser des Reflexes (27) bestimmt, und dass man den Abstand des Mittelpunkts des Reflexes (27) von dem Mittelpunkt des Strichkreuzes (21) und den berechneten Durchmesser des Reflexes (27) mit Schwellenwerten vergleicht, um zu definieren, ob das obere Verschlussstück (4) des Kembrennstabs (1) nach der Verschweißung konform ist.

7. Verfahren nach Anspruch 6, **dadurch gekennzeichnet, dass** man die Ränder des Reflexes (27) auf einer ersten Achse des Strichkreuzes (21) sucht,
man davon eine erste Position des Mittelpunkts und einen ersten Wert des Durchmessers des Reflexes (27) ableitet,
man die Ränder des Reflexes (27) auf einer durch den vorhergehend definierten ersten Mittelpunkt des Reflexes (27) verlaufenden, zu der ersten Achse senkrechten zweiten Achse sucht,
man davon eine zweite Position des Mittelpunkts und einen zweiten Wert des Durchmessers des Reflexes (27) ableitet,
man den ersten und den zweiten Durchmesser vergleicht, um die Kohärenz der erhaltenen Werte zu verifizieren,
man den Abstand zwischen dem zweiten Mittelpunkt des Reflexes (27) und dem Mittelpunkt des Strichkreuzes (21) bestimmt, und
man den Abstand zwischen dem Mittelpunkt des Reflexes (27) und dem Mittelpunkt des Strichkreuzes (21) und den berechneten Durchmesser des Reflexes (27) mit Schwellenwerten vergleicht, um die Konformität der Realisierung des dichten Verschlusses durch Verschweißung des Einfüllkanals (7) des oberen Verschlussstücks (4) des Brennstabs (1) zu bestimmen.

8. Verfahren nach Anspruch 7, **dadurch gekennzeichnet, dass** man die Suche der Ränder des Reflexes (27) auf jeder der ersten und zweiten Achsen durchführt, indem man ein Diagramm festlegt, das die Graupegel längs einer zu der ersten und der zweiten Achse parallelen mittleren Zeile liefert, einem Mittelwert der Graupegel längs mehrerer Zeilen oder Spalten des digitalisierten Bildes entsprechend, die jeweils parallel sind zu der ersten oder zweiten Achse und beiderseits der ersten oder zweiten Achse angeordnet sind.

## Claims

1. Method of controlling a sealed closure operation by welding an end opening (8a, 7a) of a filling channel (7) passing axially through an upper plug (4) for closing the cladding (2) of a fuel rod (1) for a nuclear reactor, the cladding (2) of the rod (1) containing a plurality of nuclear fuel pellets (3) stacked in the axial direction of the cladding (2) and two closure plugs, with the channel (7) for filling the cladding (2) of the rod (1) going through one of the plugs or the upper plug through an inert pressurised gas and the sealed closure by welding of the filling channel (7) of the upper plug (4) taking place, after filling the cladding (2) with the inert pressurised gas in a filling apparatus (9), by melting a central part (7a) of the end of the plug (4) adjacent to the opening (8a) of the filling channel, **characterised in that**, prior to the sealed closure of the filling channel (7), with the rod (1) in a position for filling and for the sealed welding of the upper plug (4) in the filling apparatus (9), images are taken of the end surface (8) of the plug (4) onto which the filling channel (7) emerges through a substantially circular inlet opening (8a) to obtain a digitised image, the position of the centre of the circular inlet opening (8a) of the filling channel (7) relative to a reference position (21) and the diameter of the inlet opening (8a) of the filling channel (7) are determined by analysing the digitised image,
- it is thereby deduced whether it is possible to weld the filling channel (7),
- in the case where sealed closure of the filling channel (7) is by welding, images are taken of the end of the plug (4) after welding and the presence and position of a welding point (10) for sealed closure of the filling channel (7) is determined.

2. Method according to claim 1, **characterised in that**:
- the reference position (21) consists of the centre of a lattice having a horizontal and a vertical axis, the position of the centre of the lattice (21) corresponding to a position for adjusting a welding means (12) such as a laser beam for the sealed closure by welding of the filling channel (7) of the plug (4),
- the edges of the inlet opening (8a) of the filling channel (7) on the end surface (8) of the plug (4) along a first axis of the lattice (21) are sought,
- a first position of the centre of the circular inlet opening (8a) of the filling channel (7) and a first value of the diameter of the inlet opening (8a) is thereby deduced,
- the edges are sought of the opening along a second axis perpendicular to the first axis of the lattice passing through the previously defined centre,
- a second position of the centre of the circular opening (8a) of the filling channel (7) and a second value of the diameter of the circular inlet opening (8a) of the filling channel (7) are thereby deduced,
- the edges of the circular opening (8a) are sought, along a third axis perpendicular to the second axis passing through the second previously defined centre,
- a third position of the centre of the circular opening (8a) and a third value of the diameter of the circular opening (8a) are thereby deduced, the third centre of the circular opening (8a) being considered as the actual centre of the opening (8a),
- the second and third diameters are compared to each other to thereby deduce the consistency of the values of the second and third diameters considered as the diameters of the circular opening (8a),
- the distance between the third determined position of the centre of the opening (8a) and the centre of the lattice (21) is determined, and
- the calculated distance between the centres of the circular opening (8a) and the lattice (21) as well as the calculated value of the diameter of the circular inlet opening (8a) of the filling channel (7) are compared to threshold values to determine the compliance of the inlet opening (8a) of the filling channel and its positioning and the possibility of sealed closure by welding.

3. Method according to claim 2, **characterised in that** the edges of the inlet opening (8a) of the filling channel (7) are sought along each of the axes, from a graph giving the grey levels along a mean row or column of the digitised image, i.e. the average grey levels along N rows or columns parallel to the axis along which the search is carried out and which are situated on either side of this axis.

4. Method according to claim 3, **characterised in that** the edges of the circular inlet opening (8a) of the filling channel (7) are determined by using a threshold value of the grey levels forming a mean between the grey levels of the image of the filling channel and the grey levels of the surface of the upper plug (4) around the circular inlet opening (8a) of the filling channel.

5. Method according to claim 1, **characterised in that** after the sealed closure of the filling channel (7) of the upper plug (4), for example by a laser welding pulse (10), a reflection (27) of the welding pulse (10) with a central part in the form of a crater reflecting axially directed light is sought on the digitised image of the end surface (8) of the plug, and the position of the centre and the size of the reflection (27) are determined.

6. Method according to claim 5, **characterised in that** the position of the centre of the reflection (27) is determined in relation to a centre of a lattice (21) defined by two perpendicular axes, horizontal and vertical respectively, on the digitised image corresponding to a welding position as well as the diameter of the reflection (27), and the distance from the centre of the reflection (27) to the centre of the lattice (21) and the calculated diameter of the reflection (27) are compared to threshold values to define whether the upper plug (4) of the fuel rod (1) complies after welding.

7. Method according to claim 6, **characterised in that** the edges of the reflection (27) are sought along a first axis of the lattice (21),
a first position of the centre and a first value of the diameter of the reflection (27) are thereby deduced,
the edges of the reflection (27) are sought along a second axis perpendicular to the first passing through the first centre of the previously defined reflection (27),
a second position of the centre and a second value of the diameter of the reflection (27) are thereby deduced,
the first and second diameters are compared to check the consistency of the values obtained,
the distance between the second centre of the reflection (27) and the centre of the lattice (21) is determined, and
the distance between the centre of the reflection (27) and the centre of the lattice (21) and the calculated diameter of the reflection (27) are compared to threshold values to determine the compliance of the sealed closure by welding of the filling channel of the upper plug (4) of the rod (1).

8. Method according to claim 7, **characterised in that** the edges of the reflection (27) are sought along each of the first and second axes, by determining a graph giving the grey levels along a mean row parallel to the first and second axes respectively corresponding to a mean of the grey levels along several rows or columns of the digitised image parallel to the first or second axes respectively and arranged on either side of the first or second axes.
